# EUROPÄISCHE PATENTSCHRIFT

(11) **EP 0 600 049 B1**
(45) Veröffentlichungstag und Bekanntmachung des Hinweises auf die Patenterteilung: **16.09.1998**
(21) Anmeldenummer: 93907745.9
(22) Anmeldetag: 19.04.1993
(51) Int. Cl.: B23D 19/06, B23D 35/00, B26D 7/26

(54) **ROLLSCHNEIDEINHEIT**
ROLLER CUTTING UNIT
UNITE A DECOUPER A MOLETTES

(30) Priorität: 25.06.1992 CH 2006/92
(43) Veröffentlichungstag der Anmeldung: 08.06.1994
(73) Patentinhaber: ELPATRONIC AG, 8962 Bergdietikon (CH)
(72) Erfinder: LANGHANS, René, CH-9042 Speicher (CH)
(86) Internationale Anmeldenummer: CH9300101
(87) Internationale Veröffentlichungsnummer: WO9400261

(56) Entgegenhaltungen:
- FR-A- 794 676
- FR-A- 2 260 523
- FR-A- 2 344 364
- FR-A- 2 349 416
- US-A- 2 187 211
- US-A- 4 428 265
- SHEET METAL INDUSTRIES Bd. 50, Nr. 3, M rz 1973, LONDON Seiten 165 - 166 , XP6774000 'IMPROVED COIL SLITTING CUTTERS'

## Beschreibung

Die Erfindung bezieht sich auf eine Rollschneideinheit für eine Vorrichtung zum Schneiden flacher Materialbahnen und Blechtafeln gemäss der Gattung des Patentanspruchs 1 (siehe FR-A 2 349 416), sowie eine Vorrichtung zum Schneiden flacher Materialbahnen mit mehreren solcher Rollschneideinheiten.

Gattungsgemässe Vorrichtungen werden insbesondere zum Schneiden von dünnen Blechen, z.B. in der Konservenindustrie, sowie von Papier und Karton verwendet. Das Schneiden von Dosenzargen verlangt höchste Präzision und Sauberkeit bei einer konstant hohen Ausstossleistung.

Aus der FR 612.303 MARINONI ist beispielsweise eine Papierschneidmaschine mit zwei in einem festen Rahmen angebrachten Wellen bekannt, auf denen die einzelnen Rollmesser in verschiebbarer Weise angeordnet sind. Weiter ist aus der FR 2.340.170 METAL BOX LTD. eine Blechschneidvorrichtung mit einer Serie von auf zwei separaten Wellen verschieblich angeordneten Rollmesser bekannt.

Beiden Vorrichtungen gemäss dem Stand der Technik ist die Anordnung der Rollmesser auf zwei zueinander parallelen, langen Wellen gemeinsam, wobei die Einstellung der Schnittbreite durch entsprechende axiale Verschiebung der einzelnen Rollmesser erfolgt. Dies bedingt, dass jedes zusammenwirkende Rollmesserpaar einzeln, auf der oberen und der unteren Welle verstellt werden muss und wieder aufeinander ausgerichtet werden muss. Es ist offensichtlich, dass ein solcher Vorgang nicht nur kompliziert und zeitraubend ist, sondern auch zu einem ungenauen Resultat führen kann und immer die Gefahr einer Schneidkantenbeschädigung besteht. Die Verstellung der einzelnen Rollmesser auf den langen Wellen erfolgt zumeist hydraulisch mittels entsprechender Ölleitungen. Diese Technik bringt es mit sich, dass die Schneidvorrichtung und damit auch das Schneidgut mit Öl kontaminiert wird, was insbesondere bei der Herstellung von Konservendosen sehr nachteilig ist.
Ein weiter Nachteil bei den Vorrichtungen gemäss dem Stand der Technik liegt in der notwendigerweise starken Dimensionierung der Rollmesserwellen. Um dem hohen Druck beim Schneiden von Blech und der damit verbundenen Durchbiegungsgefahr, insbesondere in der Mitte der Welle, gerecht zu werden, muss diese einen beachtlichen Durchmesser aufweisen. Zum Schneiden dünner Bleche werden beispielsweise Wellen mit einem Durchmesser von 105 mm benötigt. Solche Wellen sind somit auch teuer und empfindlich gegen Wärmeausdehnung. Bedingt durch den grossen Wellendurchmesser sind auch grosse Messerdurchmesser notwendig, welche einen ungünstigen, relativ flachen Schnittwinkel aufweisen und entsprechend unsaubere Schnittkanten produzieren.

Hier will die Erfindung Abhilfe schaffen. Der Erfindung liegt die Aufgabe zugrunde, eine Rollschneideinheit für eine Vorrichtung zum Schneiden flacher Materialbahnen und Blechtafeln schaffen, welche einfach, kompakt, kostengünstig und verschmutzungsarm ist, und welche als Ganzes in Querrichtung zur Schnittrichtung verschoben werden kann, so dass sich ein gegenseitiges Justieren des zusammenwirkenden Rollmesserpaars erübrigt.

Die Erfindung löst die gestellte Aufgabe mit einer Rollschneideinheit, welche die Merkmale des Anspruchs 1 aufweist, sowie einer Vorrichtung zum Schneiden flacher Materialbahnen mit mehreren solcher Rollschneideinheiten, welche die Merkmale des Anspruchs 9 aufweist.

Weitere vorteilhafte Ausgestaltungen der Erfindung sind in den abhängigen Ansprüchen gekennzeichnet.

Die durch die Erfindung erreichten Vorteile sind im wesentlichen folgende:
- eine stark vereinfachte Handhabung der Rollmesser, weil die Schnittluft zwischen den beiden zusammenwirkenden Rollmessern für die Dauer ihrer Standzeit nur ein einziges Mal eingestellt werden muss;
- praktisch kein Risiko betreffend der Beschädigung der Schneidkanten beim Verstellen, bzw. Einstellen der Rollmesser, da die Schnittluft nur einmal eingestellt zu werden braucht, kein Auseinander-, resp. Zusammmenfahren der Rollmesser, bzw. der Messerwellen notwendig ist und die Rollmesser während der gesamten Standzeit fest eingebaut bleiben;
- eine stark reduzierte Umstellzeit, weil das zeitraubende Einstellen und Kontrollieren der Schnittluft entfällt, statt eines Rollmessers ein Rollmesserpaar in einem einzigen Schritt positionierbar ist, kein Auseinander-, resp. Zusammmenfahren der Rollmesser, bzw. der Messerwellen notwendig ist und die Rollschneideinheiten vollautomatisch verstellt werden können;
- eine stark erhöhte Verfügbarkeit und Produktionsleistung der Schneidvorrichtung als Ganzes, wegen der reduzierten Umstellzeiten, dem schnellen Austausch einer verbrauchten durch eine Reserve-Rollschneideinheit, dem einfachen Ausbau von Verschleissteilen (Rollmesser, Transportring u.ä.) da die Messerwellen nicht durchgehend sind, der Möglichkeit den Austausch der Verschleissteile und das Schleifen der Rollmesser ausserhalb der Schneidvorrichtung durchzuführen. Die kompakt ausgebildete Rollschneideinheit, deren Obermesser keinen formschlüssigen Antrieb aufweist wie beim Stand der Technik kann einfach und rasch als Ganzes ausgetauscht werden, was allfällige Betriebsunterbrüche auf ein Minimum reduziert.
- eine konstante, gratfreie Schnittkantenqualität, dank der konstanten Schnittluft, der konstanten um 50% reduzierten Überlappung und der stark reduzierten Scherfläche. Da der Druck zwischen den beiden zusammenwirkenden Rollmessern allein von dem sie umfassenden Rahmen getragen wird (und nicht wie beim Stand der Technik von langen, durchbiegungsanfälligen Wellen) kann der Wellendurchmesser vergleichsweise gering gehalten werden. Der dadurch verringerte Messerdurchmesser führt zu einem steileren Schnittwinkel, der kleinere Kräfte erzeugt und somit zu einer schöneren Schnittkante führt.

Die Erfindung und Weiterbildungen der Erfindung werden im folgenden anhand der teilweise schematischen Darstellungen mehrerer Ausführungsbeispiele noch näher erläutert. Es zeigen:
Fig. 1 eine perspektivische Darstellung der erfindungsgemässen Rollschneideinheit;
Fig. 2 eine Vorderansicht gegen die Laufrichtung der erfindungsgemässen Rollschneideinheit;
Fig. 3 einen Querschnitt längs der Linie III-III in Fig. 2;
Fig. 4 einen Querschnitt längs der Linie IV-IV in Fig. 3;
Fig. 5 eine schematische Darstellung des Schervorganges in einer Schneidvorrichtung gemäss dem Stand der Technik; und
Fig. 6 eine schematische Darstellung des Schervorganges in der erfindungsgemässen Rollschneideinheit.

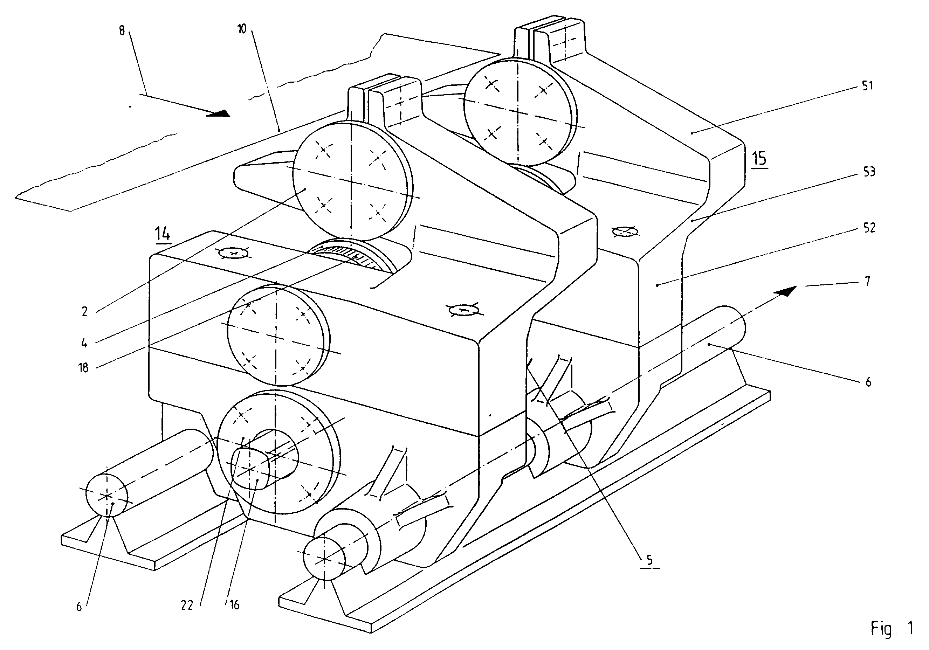

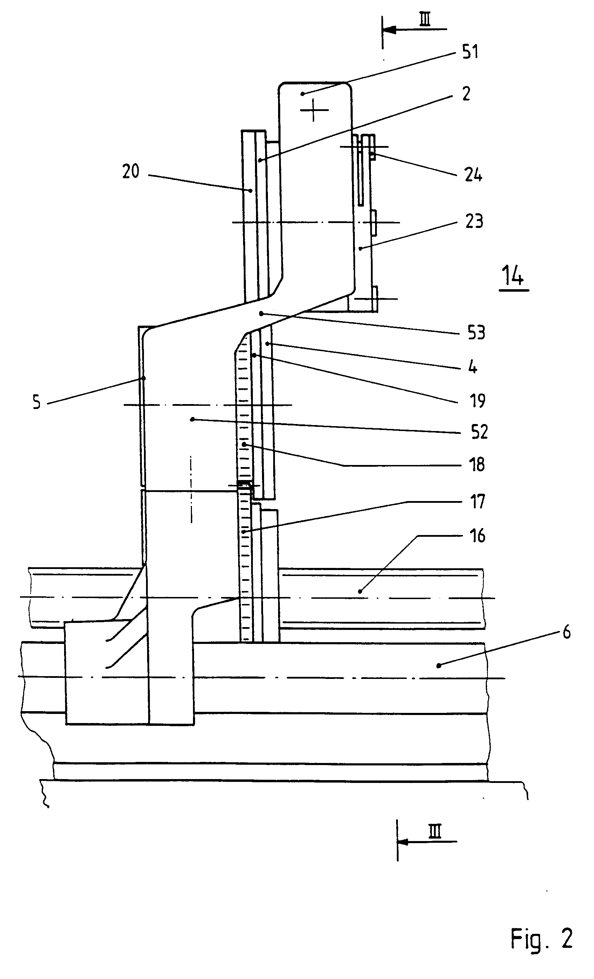

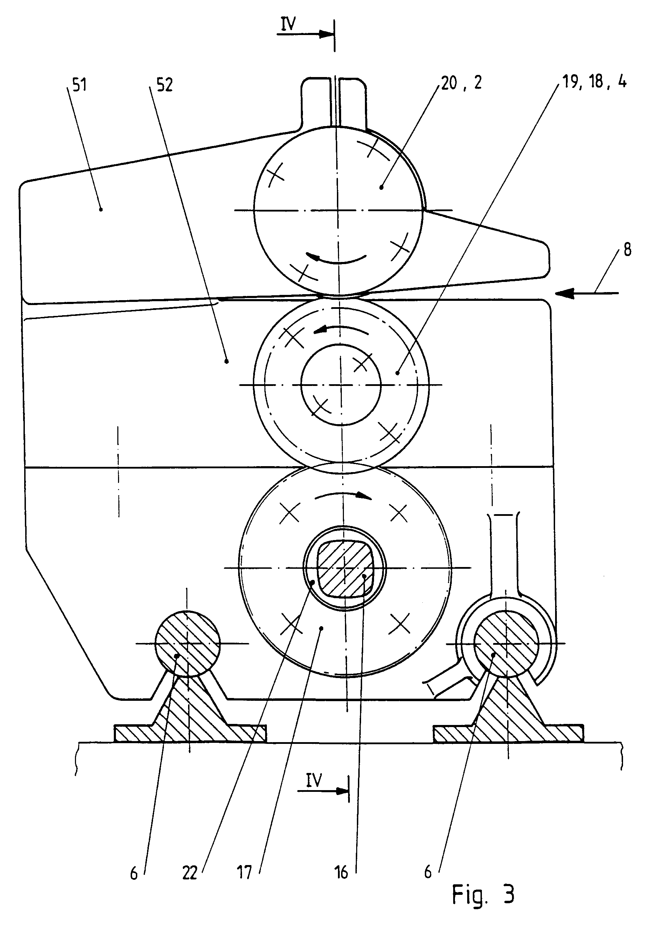

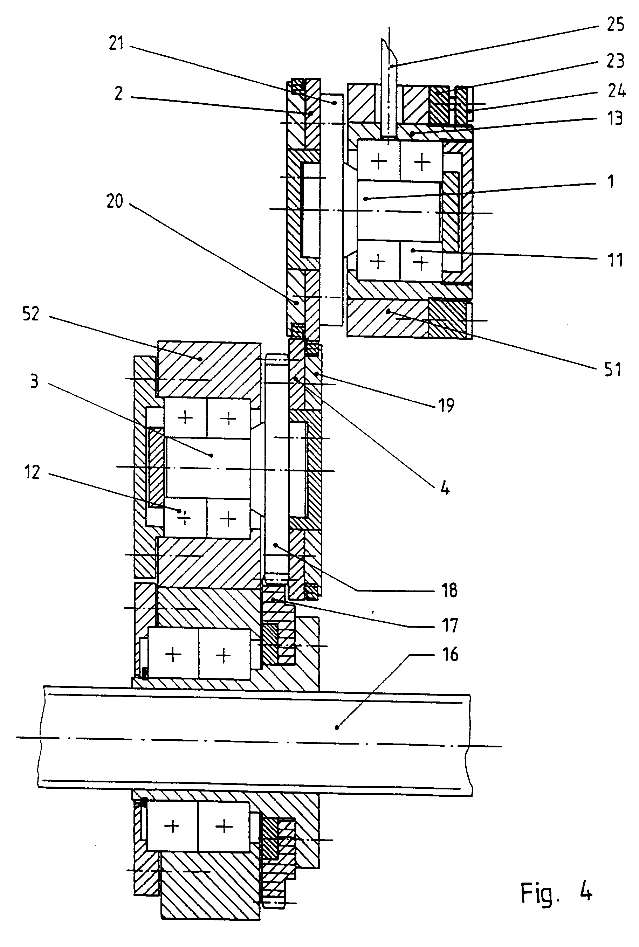

Die in den Fig. 1 - 4 dargestellte, erfindungsgemässe Rollschneideinheit besteht im wesentlichen aus einem oberen Rollmesser 2 und einem unteren Rollmesser 4, die beide senkrecht zur Horizontalebene 10, in der Längsrichtung 8 wirken, d.h. in der Ebene und Laufrichtung der zuzuführenden flachen Materialbahn, beispielsweise einer dünnen Blechtafel für die Konservendosenfabrikation.
Das obere Rollmesser 2 ist auf einer oberen Messerwelle 1 und das untere Rollmesser 4 auf einer unteren Messerwelle 3 befestigt, welche beide parallel zur Horizontalebene 10 und zur Querrichtung 7 verlaufen. Die beiden Messerwellen 1,3 sind, wie in Fig. 4 im Detail dargestellt, in einem spielfreien oberen Messerwellenlager 11, bzw. einem unteren Messerwellenlager 12 gelagert. Das obere Messerwellenlager 11 ist in einer längsverschieblich angeordneten Schiebhülse 13 untergebracht, um die Schnittlufteinstellung zu ermöglichen, welche für Dosenbleche vorteilhafterweise auf 0,01 bis 0,02 mm eingestellt wird.

Die beiden Messerwellen 1,3 sind in einem festen Abstand zueinander, in einem gemeinsamen Rahmen 5 untergebracht, der im wesentlichen U-förmig ausgebildet ist. Der obere Schenkel 51 und der untere Schenkel 52 des Rahmens 5 sind durch einen flachen, die Horizontalebene 10 unter einem spitzen Winkel von etwa 10° schneidenden Übergangsteil 53 untereinander verbunden. Der Übergangsteil 53 liegt somit praktisch in der Horizontalebene 10 und löste die bereits zerschnittene Materialbahn relativ zur Laufrichtung 8 in einen rechten oberen Streifen und einen linken unteren Streifen auf. Da die Messerwellen 1,3 kurz gebaut sind und keine grösseren Kräfte aufzunehmen haben, kann der Übergangsteil 53 relativ dünn gehalten werden und auch für die Messerwellen selbst genügt eine Durchmesser von ca. 15 mm.

Der Rahmen 5 ist auf zwei parallel zu den Messerwellen 1,3 verlaufenden Führungsschienen 6 in der Querrichtung 7 verschiebbar gelagert, so dass die Rollschneideinheit 14 leicht als Ganzes verschoben und relativ zu anderen, ebenfalls auf den Führungsschienen 6 angeordneten Rollschneideinheiten 15 positioniert werden kann.
Die zeichnerisch nicht dargestellte Arretierung der Rollschneideinheit auf den Führungsschienen 6 kann durch übliche mechanische Klemmsysteme erfolgen. Die Positionierung der Rollschneideinheiten auf den Führungsschienen 6 in der senkrecht zur Längsrichtung 8 stehenden Querrichtung 7 kann mittels eines elektro-mechanischen Systems erfolgen, wobei die Wegmessung vorzugsweise integriert ist. Die Auflösegenauigkeit sollte zweckmässigerweise ca. 0,01 mm, die Positioniergenauigkeit ca. ± 0,01 mm betragen.

Die zeichnerisch nicht dargestellte Zuführung des zu schneidenden Materials, insbesondere von flachen Materialbahnen und Blechtafeln erfolgt gemäss dem Stand der Technik mittels üblicher Tafel- bzw. Streifeneinschubvorrichtungen. Das gleiche gilt für die Abführung des zerschnittenen Materials mittels konventioneller Transportbänder.

Der Antrieb der Rollschneideinheit 14 erfolgt über eine, ein annähernd quadratisches Profil aufweisende Antriebswelle 16, welche ein, eine ebenfalls ein annähernd quadratisches Profil aufweisende Bohrung 22 aufweisendes Zahnrad 17 antreibt. Die Antriebswelle 16 kann durch einen zeichnerisch nicht dargestellten Elektromotor oder irgend ein anderes geeignetes Antriebsaggregat bewegt werden. Das Zahnrad 17 steht mit dem Zahnrad 18 in Eingriff. Das Zahnrad 18 bildet zugleich den Befestigungsflansch der einteiligen unteren Messerwelle 3, an welche seitlich das untere Rollmesser 4 befestigbar ist.
Das obere Rollmesser 2 ist in derselben Art am Flansch 21 der oberen, einteiligen Messerwelle 1 befestigbar.

Der Antrieb des oberen Rollmessers 2 erfolgt indirekt durch die Wirkung des motorisch angetriebenen unteren Rollmessers 4 mit Transportring 19 und 20. Dem unteren, motorisch angetriebenen Rollmesser 4 steht dabei der obere, frei rotierbare Transportring 20 gegenüber, während dem oberen, frei rotierbaren Rollmesser 2 der untere, motorisch angetriebene Transportring 19 gegenübersteht.

Die Schnittlufteinstellung zwischen den beiden Rollmessern 2,4 erfolgt durch Lösen der Spannschraube 24, welche die Gewindeflanken der geschlitzten Mutter 23 gegen die Gewindeflanken der Schiebehülse 13 spannt und anschliessendes Verdrehen der Schiebehülse 13 mittels eines Stiftschlüssels. Die Drehbewegung der Schiebehülse 13 wird durch die Steigung des spielfreien Feingewindes zwischen drehender Schiebehülse 13 und stehender geschlitzter Mutter 23 in eine Zustellbewegung umgesetzt, wodurch die Schnittluft genau einstellbar wird. Bei der dargestellten Ausführungsform entspricht einer vollen Umdrehung von 360° eine Gewindesteigung von 0,75 mm.
Nach erfolgter Schnittlufteinstellung wird die Spannschraube 24 wieder festgezogen, womit die eingestellte Position fixiert ist. Als zweckmässig hat sich eine Schnittluft zwischen den beiden Rollmessern 2,4 im Bereich von 0,005 - 0,030 mm, vorzugsweise von 0,01 - 0,02 mm, erwiesen.

Die Überlappung der beiden Rollmesser 2,4 wird zweckmässigerweise fest eingestellt und beträgt bei diesem Ausführungsbeispiel 0,2 mm.

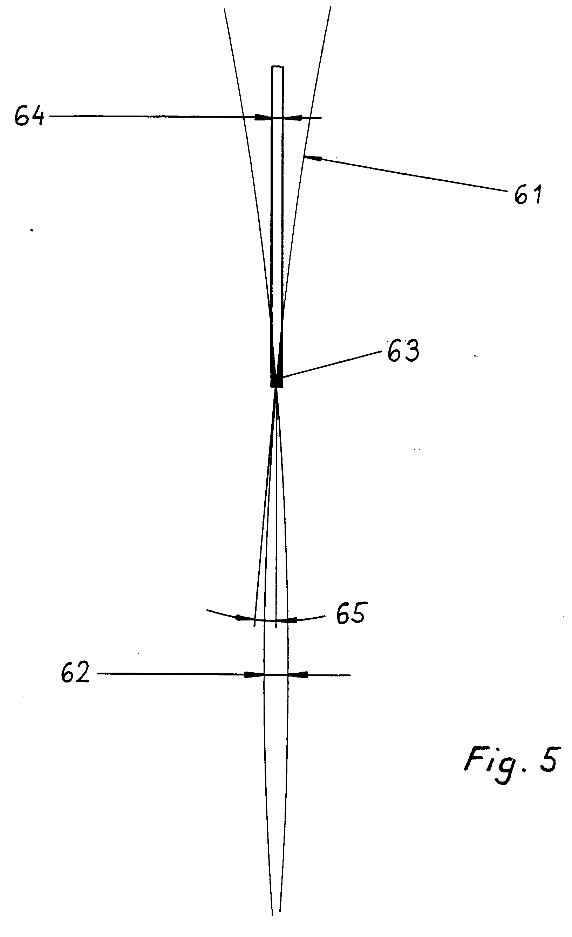

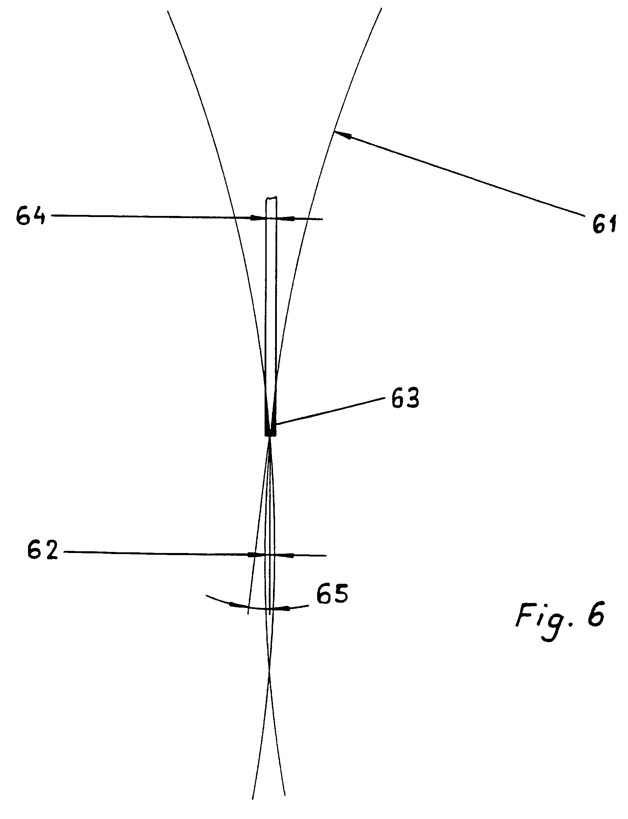

In den Fig. 5 und 6 ist ein schematischer Vergleich zwischen den Schervorgängen einmal bei einer Schneidvorrichtung gemäss dem Stand der Technik und einmal gemäss der Erfindung dargestellt. Die für den Schervorgang relevanten Parameter vergleichen sich wie folgt:

| PARAMETER | FIG. 5 (Stand der Technik) | FIG. 6 (Erfindung) |
|---|---|---|
| Rollmesserdurchmesser 61 | 100 % | 41 % |
| Überlappung 62 | 100 % | 40 % |
| Scherfläche 63 | 100 % | 61 % |
| Schnittzeit | 100 % | 60 % |
| Blechdicke 64 | 0,25 mm | 0,25 mm |
| Schnittwinkel 65 | 5° | 7° |

Die prozentuale Gegenüberstellung zeigt eindrücklich die mit der erfindungsgemässen Rollschneideinheit erzielbaren Reduktionen betr. Überlappung, Scherfläche und Schnittzeit sowie Vergrösserung des Schnittwinkels, welche den Grund für die stark verbesserten Schnittkantenqualitäten darstellen.

## Patentansprüche

1. Rollschneideinheit für eine Vorrichtung zum Schneiden flacher Materialbahnen und Blechtafeln in einer Horizontalebene (10) mit einem oberen (2) und einem unteren (4) Rollmesser, die beide senkrecht zur Horizontalebene (10) in der Längsrichtung (8) der Materialbahn wirkend, je auf einer oberen (1), bzw. unteren (3), parallel zur Horizontalebene (10) und senkrecht zur Längsrichtung (8) verlaufenden Messerwelle gelagert sind, wobei die beiden Messerwellen (1,3) in fester Relation zueinander in einem gemeinsamen Rahmen (5) angeordnet sind und der Rahmen (5) im wesentlichen U-förmig ausgebildet ist, wobei dessen oberer (51) und unterer (52) Schenkel durch einen flachen, die Horizontalebene (10) unter einem spitzen Winkel schneidenden Übergangsteil (53) untereinander verbunden sind,
**dadurch gekennzeichnet, dass**
bei dem unteren Rollmesser (4) ein mit diesem angetriebener, unterer Transportring (19) vorgesehen ist, der dem oberen, frei rotierbaren Rollmesser (2) gegenübersteht und dass bei dem oberen Rollmesser (2) ein oberer Transportring (20) vorgesehen ist, der dem unteren Rollmesser (4) gegenübersteht.

2. Rollschneideinheit nach Anspruch 1, dadurch gekennzeichnet, dass die Schnittluft zwischen den beiden Rollmessern (2,4) im Bereich von 0,005 - 0,030 mm einstellbar ist.

3. Rollschneideinheit nach Anspruch 1 oder 2, dadurch gekennzeichnet, dass der Rahmen (5) auf einer oder mehreren parallel zu den Messerwellen (1,3) verlaufenden Führungsschienen (6) als Ganzes senkrecht zur Längsrichtung (8) verschiebbar ist.

4. Rollschneideinheit nach einem der Ansprüche 1 bis 3, dadurch gekennzeichnet, dass die obere Messerwelle (1) in einer im oberen Schenkel (51) des Rahmens (5) axial verschieblich angeordnete Schiebehülse (13) gelagert ist.

5. Rollschneideinheit nach einem der Ansprüche 1 bis 4, dadurch gekennzeichnet, dass die Schnittluft zwischen den beiden Rollmessern (2,4) im Bereich von 0,01 - 0,02 mm einstellbar ist.

6. Rollschneideinheit nach Anspruch 1, dadurch gekennzeichnet, dass die Überlappung der beiden Rollmesser (2,4) im Bereich von 0,15 - 0,4 mm, vorzugsweise 0,18 - 0,23 mm liegt.

7. Rollschneideinheit nach einem der Ansprüche 1 bis 6, dadurch gekennzeichnet, dass der Schnittwinkel der beiden Rollmesser (2,4) im Bereich von 6° - 8°, vorzugsweise von 6,5° - 7,5° liegt.

8. Rollschneideinheit nach einem der Ansprüche 1 bis 7, dadurch gekennzeichnet, dass der Durchmesser der beiden Messerwellen (1,3) kleiner als 25 mm, vorzugsweise kleiner als 20 mm ist.

9. Rollschneideinheit nach einem der Ansprüche 1 bis 8, dadurch gekennzeichnet, dass der Übergangsteil (53) die Horizontalebene (10) unter einem Winkel von 8° - 12°, vorzugsweise von 9 - 11° schneidet.

10. Rollschneideinheit nach einem der Ansprüche 1 bis 9, dadurch gekennzeichnet, dass der Antrieb des oberen Rollmessers (2) indirekt durch die Wirkung des motorisch angetriebenen unteren Rollmessers (4), vorzugsweise mittels zweier Transportringe (19,20), erfolgt.

11. Vorrichtung zum Schneiden flacher Materialbahnen mit mehreren Rollschneideinheiten nach einem der Ansprüche 1 bis 10, dadurch gekennzeichnet, dass die Rollschneideinheiten (14,15) auf den Führungsschienen (6) in der senkrecht zur Längsrichtung (8) stehenden Querrichtung (7) positionierbar und in lösbarer Weise arretierbar sind.

12. Vorrichtung nach Anspruch 11, dadurch gekennzeichnet, dass die Rollschneideinheiten (14,15) gleichsinnig auf den Führungsschienen (6) angeordnet sind.

## Claims

1. Roller cutting unit for apparatus for cutting flat material web and sheet metal in a horizontal plane (10) having an upper roller blade (2) and a lower roller blade (4) both acting perpendicularly with respect to the horizontal plane (10) in the longitudinal direction (8) of the material web, respectively carried by an upper blade shaft (1) and a lower blade shaft (3) which extend parallel to the horizontal plane (10) and perpendicularly with respect to the longitudinal direction (8), the two blade shafts (1,3) being arranged in a common frame (5) in fixed relation to each other, and the frame (5) being essentially of U-shaped construction, its upper arm (51) and its lower arm (52) being connected to each other by a flat transition part (53) which intersects the horizontal plane (10) at an acute angle, characterised in that the lower roller blade (4) is provided with and driven with a lower driving ring (19) which is disposed opposite to the upper freely rotatable roller blade (2), and that the upper roller blade (2) is provided with an upper driving ring (20) which is disposed opposite to the lower roller blade (4).

2. Roller cutting unit according to claim 1, characterised in that the cutting clearance between the two roller blades (2,4) is adjustable within the range of 0.005 - 0.030 mm.

3. Roller cutting unit according to claim 1 or 2, characterised in that the frame (5) is displaceable as an entity perpendicularly with respect to the longitudinal direction (8) upon one or more guide rails (6) extending parallel to the blade shafts (1,3).

4. Roller cutting unit according to one of claims 1 to 3, characterised in that the upper blade shaft (1) is carried in a displacement bush (13) which is arranged to be axially displaceable in the upper arm (51) of the frame (5).

5. Roller cutting unit according to one of claims 1 to 4, characterised in that the cutting clearance between the two roller blades (2,4) is adjustable within the range of 0.01 - 0.02 mm.

6. Roller cutting unit according to claim 1, characterised in that the overlap of the two roller blades (2,4) lies within the range of 0.15 - 0.4 mm, preferably 0.18 - 0.23 mm.

7. Roller cutting unit according to one of claims 1 to 6, characterised in that the cutting angle of the two roller blades (2,4) lies within the range of 6° - 8°, preferably of 6.5° - 7.5°.

8. Roller cutting unit according to one of claims 1 to 7, characterised in that the diameter of the two blade shafts (1,3) is smaller than 25mm, preferably smaller than 20mm.

9. Roller cutting unit according to one of claims 1 to 8, characterised in that the transition part (53) intersects the horizontal plane (10) at an angle of 8° - 12°, preferably of 9° - 11°.

10. Roller cutting unit according to one of claims 1 to 9, characterised in that the drive of the upper roller blade (2) results indirectly from the action of the motor driven lower roller blade (4), preferably by way of two driving rings (19,20).

11. Apparatus for cutting flat material web by means of a plurality of roller cutting units according to one of claims 1 to 10, characterised in that the roller cutting units (14,15) are positionable on the guide rails (6) in the tansverse direction (7) which is perpendicular to the longitudinal direction (8), and releasably lockable.

12. Apparatus according to claim 11, characterised in that the roller cutting units (14,15) are arranged on the guide rails (6) in the same direction.

## Revendications

1. Unité de découpage à molettes pour un dispositif servant à découper des bandes de matériau et des panneaux de tôle plats dans un plan horizontal (10), comportant un couteau supérieur en forme de molette (2) et un couteau inférieur en forme de molette (4), qui sont montés tous deux de manière à agir perpendiculairement au plan horizontal (10) dans la direction longitudinale (8) de la bande de matériau, respectivement sur un arbre porte-couteau supérieur (1) et sur un arbre porte-couteau inférieur (3), qui sont parallèles au plan horizontal (10) et sont perpendiculaires à la direction longitudinale (8), dans lequel les deux arbres porte-couteaux (1,3) sont disposés dans une relation fixe l'un par rapport à l'autre dans un châssis commun (5), et le cadre (5) est agencé essentiellement en forme de U, et dans lequel la branche supérieure (51) et la branche inférieure (52) du châssis sont reliées entre elles par une partie de jonction plate (53), qui recoupe le plan horizontal (10) sous un angle aigu,
caractérisée en ce que
dans le cas du couteau inférieur en forme de molette (4) il est prévu une bague inférieure de transport (19), qui est entraînée par ce couteau et est disposée en vis-à-vis du couteau supérieur en forme de molette (2), qui peut tourner librement, et que dans le cas du couteau supérieur en forme de molette (2) il est prévu une bague supérieure de transport (20), qui est disposée en vis-à-vis du couteau inférieur en forme de molette (4).

2. Unité de découpage à molettes selon la revendication 1, caractérisée en ce que le jeu de coupe entre les deux couteaux en forme de molettes (2,4) est réglable dans la gamme de 0,005 - 0,030 mm.

3. Unité de découpage à molettes selon la revendication 1 ou 2, caractérisée en ce que le cadre (5) est déplaçable dans son ensemble perpendiculairement à la direction longitudinale (8), sur un ou plusieurs rails de guidage (6) qui s'étendent parallèlement aux arbres porte-couteaux (1,3).

4. Unité de découpage à molettes selon l'une des revendications 1 à 3, caractérisée en ce que l'arbre porte-couteau supérieur (1) est tourillonné dans un manchon coulissant (13) disposé de manière à être déplaçable axialement dans la branche supérieure (51) du cadre (5).

5. Unité de découpage à molettes selon l'une des revendications 1 à 4, caractérisée en ce que le jeu de coupe entre les deux couteaux en forme de molettes (2,4) est réglable dans la gamme de 0,01 - 0,02 mm.

6. Unité de découpage à molettes selon la revendication 1, caractérisée en ce que le chevauchement des deux couteaux en forme de molettes (2,4) se situe dans la gamme de 0,15 - 0,4 mm, de préférence 0,18 - 0,23 mm.

7. Unité de découpage à molettes selon l'une des revendications 1 à 6, caractérisée en ce que l'angle de coupe des deux couteaux en forme de molettes (2,4) est situé dans la gamme de 6° - 8°, de préférence 6,5° - 7,5°.

8. Unité de découpage à molettes selon l'une des revendications 1 à 7, caractérisée en ce que le diamètre des deux arbres porte-couteau (1,3) est inférieur à 25 mm et de préférence inférieur à 20 mm.

9. Unité de découpage à molettes selon l'une des revendications 1 à 8, caractérisée en ce que la partie de jonction (53) recoupe le plan horizontal (10) sous un angle de 8°-12°, de préférence 9-11°.

10. Unité de découpage à molettes selon l'une des revendications 1 à 9, caractérisée en ce que l'entraînement du couteau supérieur en forme de molette (2) s'effectue d'une manière indirecte sous l'action du couteau inférieur en forme de molette (4) entraîné par un moteur, de préférence au moyen de deux bagues de transport (19,20).

11. Dispositif pour découper des bandes d'un matériau plat comportant plusieurs unités de découpage à molettes selon l'une des revendications 1 à 10, caractérisé en ce que les unités de découpage à molettes (14,15) peuvent être positionnées et bloquées de façon amovible sur les rails de guidage (6) dans la direction transversale (7) perpendiculaire à la direction longitudinale (8).

12. Dispositif selon la revendication 11, caractérisé en ce que les unités de découpage à molettes (14,15) sont disposées dans le même sens sur les rails de guidage (6).
